# FASCICULE DE BREVET EUROPEEN

(11) **EP 1 650 355 B1**
(45) Date de publication et mention de la délivrance du brevet: **25.12.2013**
(21) Numéro de dépôt: 05300828.0
(22) Date de dépôt: 17.10.2005
(51) Int. Cl.: E02B 3/06

(54) **Dispositif d'atténuation d'une houle**
Vorrichtung zur Abschwächung einer Welle
Device for mitigation of a wave

(30) Priorité: 21.10.2004 FR 0411198; 21.10.2004 FR 0411197
(43) Date de publication de la demande: 26.04.2006
(73) Titulaire: GOUVERNEMENT MONEGASQUE, REPRESENTE PAR LE MINISTRE D´ETAT, 98000 MONACO (MC)
(72) Inventeur: Manzone, Jean-Michel, 98000 Monaco (MC); Lajoie, David, 06530 Le Tignet (FR)
(74) Mandataire: David, Alain

(56) Documents cités:
- WO-A-02/48464
- FR-A- 1 289 872
- FR-A- 2 176 288
- FR-A- 2 681 621
- GB-A- 904 514
- GB-A- 1 457 183
- US-A- 3 846 988
- US-A- 4 006 598
- US-A- 4 279 536
- PATENT ABSTRACTS OF JAPAN vol. 012, no. 332 (M-738), 8 septembre 1988 (1988-09-08) & JP 63 093918 A (PENTA OCEAN CONSTR CO LTD), 25 avril 1988 (1988-04-25)

## Description

### Domaine de l'invention

L'invention se rapporte au domaine de l'hydraulique maritime et elle concerne plus particulièrement un perfectionnement au dispositif d'atténuation de la houle dit en « dos de chameau » décrit dans le brevet européen EP 0 381 572 B1.

### Art antérieur

Les dispositifs d'atténuation de la houle sont bien connus. Ils permettent de protéger des sites quelconques, par exemple des ouvrages maritimes, des installations côtières ou offshore ou encore des ports, de l'énergie des vagues incidentes venant se briser contre ces sites.

Les dispositifs les plus courants font appel à des talus en enrochement ou à des structures en béton reposant sur le sol marin, ou une combinaison des deux, qui forment ainsi depuis le fond de la mer un obstacle vertical pour les vagues incidentes.

Or, la houle étant un phénomène ondulatoire, il est apparu plus avantageux d'exploiter ce phénomène pour obtenir une onde de houle transmise au site à protéger présentant une amplitude sensiblement réduite par rapport à l'onde de houle incidente. C'est l'objet du brevet européen N° 0 282 479 B1 délivré au nom du Gouvernement Monégasque et divulguant un dispositif d'atténuation de la houle exploitant un principe particulièrement novateur et connu depuis sous le nom de « mur d'eau fixe ».

Ce dispositif comporte une plaque horizontale fixe faiblement immergée dans la houle incidente dont les bords amonts et aval sont relevés jusqu'à une cote positive au dessus de la surface libre de l'eau de sorte que la houle incidente ne puisse se propager librement au dessus de la plaque. Pour un dimensionnement adapté de la plaque, par rapport aux houles incidentes, la masse d'eau emprisonnée sous la plaque ne peut avoir que des déplacements horizontaux et se comporte globalement comme un obstacle inertiel homogène vis-à-vis de la houle incidente qui est réfléchie sur ce « mur d'eau fixe ».

Ce dispositif qui donne toute satisfaction pour des houles de période faible (inférieure à 5 secondes) engendre toutefois pour des houles de périodes plus importantes un effet de clapotis qui agit défavorablement sur l'amplitude de l'onde de houle transmise au site à protéger. C'est pourquoi, dans le brevet européen N° 0 381 572 B1 précité, délivré également au nom du Gouvernement Monégasque, il a été proposé un perfectionnement au dispositif d'atténuation de la houle qui permet d'éviter cet effet de clapotis. Un exemple préférentiel d'un tel dispositif perfectionné est illustré aux figures 6 à 8 de ce brevet européen qui montre une plaque horizontale ayant un profil symétrique dit en « dos de chameau ». Ce dispositif perfectionné dont une réalisation exemplaire est aujourd'hui opérationnelle dans le port de La Condamine de la Principauté de Monaco donne toute satisfaction pour une gamme très étendue de périodes de houle. Il est toutefois apparu que, pour les houles de forte période (de 6 à 10 secondes), les efforts hydrodynamiques horizontaux et verticaux et les moments de renversement agissant sur le dispositif étaient importants. Leur réduction serait donc de nature à minimiser le dimensionnement tant des structures de l'atténuateur que de ses supports ou liaisons.

### Objet de l'invention

L'objet de l'invention est donc de proposer un perfectionnement à l'atténuateur de houle du type « dos de chameau » qui permette une minimisation des efforts horizontaux ou verticaux comme du moment de renversement tout en préservant l'efficacité atténuatrice de la structure de base.

Ces buts sont atteints par un dispositif d'atténuation de la houle comportant une plaque horizontale faiblement immergée dans la houle incidente, ladite plaque étant maintenue en position sous la surface libre de l'eau et présentant des bords perpendiculaires amont et aval relevés jusqu'à une cote positive au dessus de la surface libre de l'eau, de sorte que la houle incidente ne puisse se propager librement par-dessus ladite plaque, lesdits bords amont et aval étant chacun prolongés à leur base par un onglet d'une même longueur déterminée, l'ensemble formant ainsi une structure à profil symétrique dit en « dos de chameau », caractérisé en ce que l'un au moins des deux éléments formés par ledit bord perpendiculaire amont et la partie de plaque, ou radier, comprise entre lesdits bords amont et aval comporte des perforations sur une partie de sa surface.

Ces perforations apportent une amélioration sensible du fonctionnement du dispositif d'atténuation « en dos de chameau » en diminuant les forces de pressions agissant sur le dispositif, notamment dans le cadre de houles fortes.

Selon un premier exemple de réalisation, ledit radier comporte des perforations sur au plus 30% de sa surface.

Cette perforation du radier offre, notamment pour des houles de fortes périodes, une réduction significative des forces verticales générées sous la plaque par le mur d'eau et qui tendraient à vouloir soulever cette plaque pour permettre le passage de l'onde de houle.

De préférence, ledit radier comportent des perforations sur environ 10% de sa surface.

Avec cette porosité aux environs de 10%, on obtient un bon compromis sur une gamme de périodes de houle étendue, c'est à dire une amélioration sensible de l'effort vertical sans détérioration visible de l'atténuation.

Selon un deuxième exemple de réalisation, ledit bord perpendiculaire amont comporte sous ladite surface libre de l'eau des perforations sur au plus 50% de sa surface.

Cette perforation du bord amont permet une diminution notable, notamment pour des houles de fortes périodes, des forces horizontales générées par la houle incidente nonobstant l'accroissement de l'effort vertical.

De préférence, ledit bord perpendiculaire amont comporte sous ladite surface libre de l'eau des perforations sur environ 30% de sa surface.

Avec cette porosité aux environs de 30%, on obtient un bon compromis sur une gamme de périodes de houle étendue, c'est à dire une diminution sensible de l'effort horizontal sans détérioration trop importante de l'effort vertical.

Selon un exemple préférentiel de réalisation, ledit radier comporte des perforations sur environ 10 % de sa surface et ledit bord perpendiculaire amont comporte sous ladite surface libre de l'eau des perforations sur environ 30% de sa surface.

Cette répartition particulière des perforations du bord amont et du radier permet une diminution notable des efforts hydrodynamiques tout en ne pénalisant pas ou quasiment pas les performances d'atténuation de la houle du dispositif.

Selon le mode de réalisation envisagé, ladite plaque horizontale peut être maintenue en position sous ladite surface libre de l'eau au moyen de supports rigides de type jackets, piles ou pieux ancrés sur le fond de la mer ou au moyen de câbles tendus ou de bielles ancrés sur le fond de la mer.

### Brève description des dessins

Les caractéristiques de la présente invention sont détaillées ci-après, à titre illustratif et non limitatif, en regard des dessins annexés sur lesquels :
- la figure 1 illustre un premier exemple de réalisation d'un dispositif atténuateur selon l'invention,
- les figures 2A à 2D sont quatre graphes montrant l'évolution respectivement du coefficient de transmission CT, de l'effort horizontal Fx, de l'effort vertical Fz et du moment de renversement My dans le dispositif de la figure 1, pour une gamme de période de houle allant de 4 s à 14 s et pour des porosités du radier de 10%, 20% et 30% respectivement,
- la figure 3 illustre un deuxième exemple de réalisation d'un dispositif atténuateur selon l'invention,
- les figures 4A à 4D sont quatre graphes montrant l'évolution respectivement du coefficient de transmission CT, de l'effort horizontal Fx, de l'effort vertical Fz et du moment de renversement My dans le dispositif de la figure 3, pour une gamme de période de houle allant de 4 s à 14 s et pour des porosités du bord amont de 10%, 20% et 30%,
- la figure 5A illustre un troisième exemple de réalisation d'un dispositif atténuateur selon l'invention lorsque celui-ci repose sur des supports rigides de type jackets, ou piles ou pieux,
- la figure 5B illustre une variante du troisième exemple de réalisation d'un dispositif atténuateur selon l'invention lorsque celui-ci, doté d'une flottabilité positive, est maintenu en position par des câbles tendus ou des bielles ancrés au fond de la mer,
- les figures 6A à 6D sont quatre graphes montrant l'évolution respectivement du coefficient de transmission CT, de l'effort horizontal Fx, de l'effort vertical Fz et du moment de renversement My dans le dispositif de la figure 5A, pour une gamme de période de houle allant de 4 s à 14 s et pour des porosités du radier et du bord amont de 10%, 20% et 30%,
- les figures 7A à 7D sont quatre graphes montrant l'évolution respectivement du coefficient de transmission CT, de l'effort horizontal Fx, de l'effort vertical Fz et du moment de renversement My dans le dispositif de la figure 5B et dans un dispositif muni de perforations sur le bord aval, pour une gamme de période de houle allant de 4 s à 14 s et pour des porosités des bords amont et aval de 30%, et
- la figure 8 montre un dispositif atténuateur en « dos de chameau » de l'art antérieur.

### Description détaillée de modes de réalisation

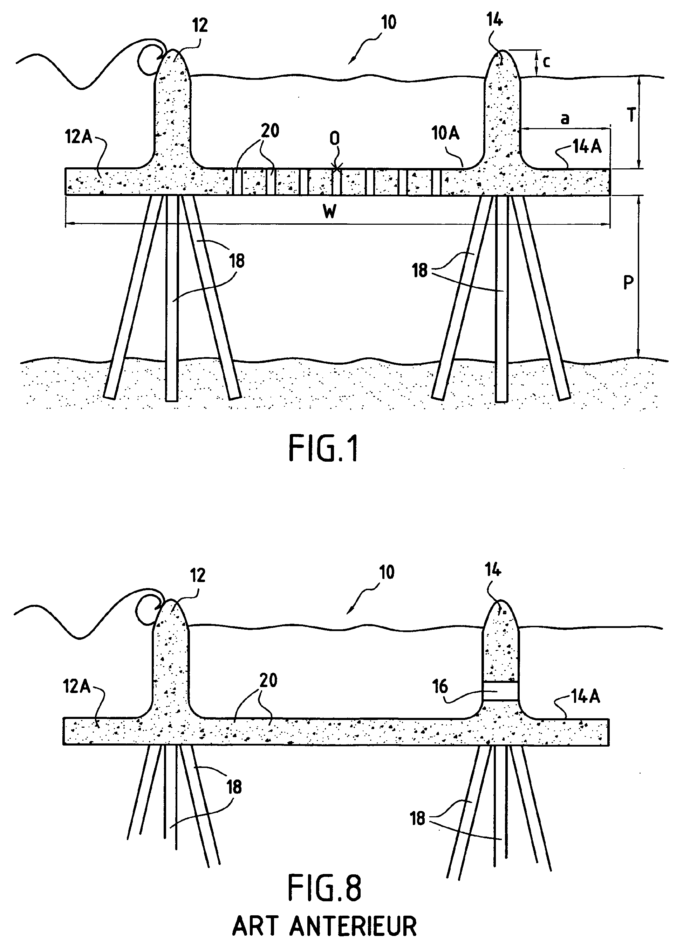

La figure 8 rappelle tout d'abord la configuration dite en « dos de chameau » du dispositif d'atténuation de houle décrit dans le brevet européen N° 0 381 572 B1 de la demanderesse et auquel est appliqué le perfectionnement de l'invention.

Ce dispositif comporte une plaque horizontale 10 faiblement immergée et dont les bords amont 12 et aval 14 sont relevés perpendiculairement jusqu'à une cote positive au dessus du niveau de la surface libre de l'eau. Au bord amont est associé un onglet ou béquet amont 12A et au bord aval un onglet ou béquet aval 14A de même forme que l'onglet amont. Du fait de la longueur très importante de ce type de dispositif (qui est par exemple disposé le long d'une côte à protéger), le volume d'eau présent dans le bassin formé entre les bords amont et aval, en cas de franchissement du bord amont par forte houle, ne peut être évacué par les deux seules extrémités latérales du dispositif et il est donc nécessaire de prévoir des ouvertures 16 pratiquées dans le bord aval pour permettre l'évacuation de l'eau accumulé dans le bassin entre deux houles successives. L'ensemble forme un profil symétrique à deux bosses semblable à un dos de chameau. Selon le mode de réalisation envisagé, la plaque peut être soit maintenue fixement, sous la surface de l'eau, par des supports rigides 18 de type jackets ou pieux verticaux ou obliques ou encore piles de diamètre suffisant, fermement ancrés sur le fond de la mer, soit maintenue en flottaison, sous la surface de l'eau, après lui avoir donné une flottabilité positive (par création dans la plaque d'espaces vides de sorte à présenter un poids total inférieur à la poussée d'Archimède) et ancrée sur le fond de la mer par des câbles tendus ou des bielles.

Selon un premier exemple de réalisation de l'invention illustré à la figure 1, applicable à l'un ou l'autre des deux modes de réalisation précités, mais qui trouve préférentiellement application lorsque le dispositif d'atténuation est doté d'une flottabilité positive et maintenu en position sous la surface de l'eau par un système de câbles tendus ou de bielles ancrés sur le fond de la mer, dans le but de limiter les forces de pression verticales agissant sur le dispositif, il est pratiqué des perforations 20 dans la partie 10A de la plaque horizontale, appelée radier, disposée entre le bord amont et le bord aval du dispositif. Ces perforations petites et nombreuses sont pratiquées sur au plus 30% de la surface de ce radier (ce taux de porosité est le rapport entre la surface percée et la surface support des perforations). En outre, le bord aval est dépourvu d'ouvertures, l'évacuation de l'eau en cas de franchissement du bord amont s'effectuant maintenant au travers des perforations 20.

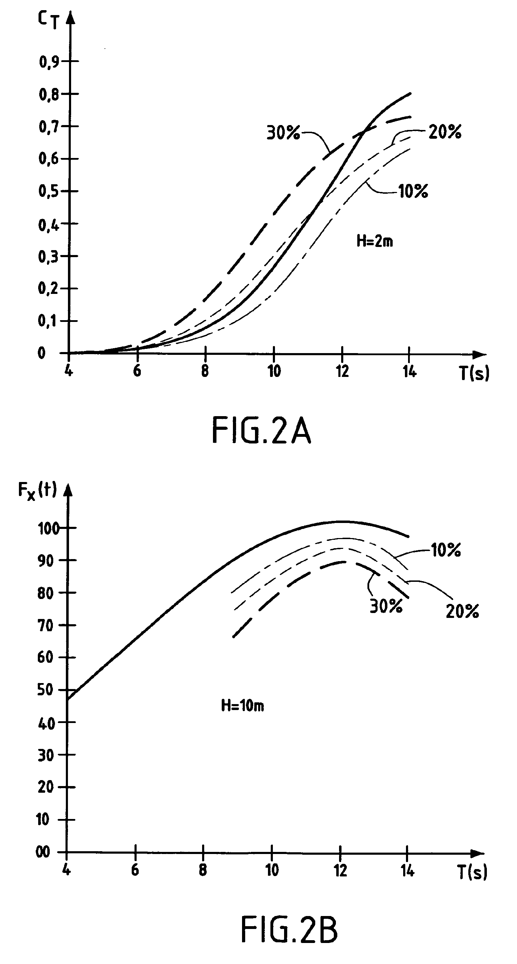

Les performances de l'atténuateur amélioré de l'invention sont illustrées en regard des figures 2A à 2D sur lesquelles ont été représentés quatre graphes montrant respectivement l'évolution du coefficient de transmission CT, de l'effort horizontal Fx, de l'effort vertical Fz et du moment de renversement My, pour une gamme de période de houle allant de 4 s à 14 s et pour des porosités du radier de 10%, 20% et 30% respectivement.

Ces courbes ont été obtenues à partir de calculs numériques et corroborés par des essais effectués en canal à houle avec une maquette à l'échelle 1/30ième d'un atténuateur de houle ayant une largeur W = 30 m, un tirant d'eau t = 9,50 m, une cote d'arase c = 2 m et une largueur d'onglet a = 5 m. L'atténuateur est supposé reposé fixement à une profondeur P = 80 m du fond sous marin. Le coefficient CT a été mesuré pour une hauteur crête à creux de la houle incidente H = 2 m correspondant à une hauteur de houle moyenne dans le bassin méditerranéen. Les efforts Fx et Fz et le moment de renversement My ont par contre été mesurés pour une hauteur de la houle incidente H = 10 m correspondant à une houle de tempête très exceptionnelle de type centennale.

La figure 2A permet de comparer le coefficient de transmission CT d'un atténuateur de houle en « dos de chameau » de l'art antérieur illustré par la courbe en traits pleins avec un atténuateur amélioré selon l'invention pour les différentes porosités précitées. Dans l'art antérieur, le coefficient de transmission est inférieur à 0,1 jusqu'à une période de 8 secondes puis augmente progressivement jusqu'à 0,40 à T = 10s et atteint 0,70 pour une période de 12 secondes. Avec l'invention, on peut noter que pour des porosités de 10 et 20 % ce coefficient CT est peu modifié dans les basses périodes et amélioré aux périodes élevées. Au-delà de ces pourcentages, l'atténuation commence à se dégrader à faible période, la limite de porosité pouvant être évaluée à 30%.

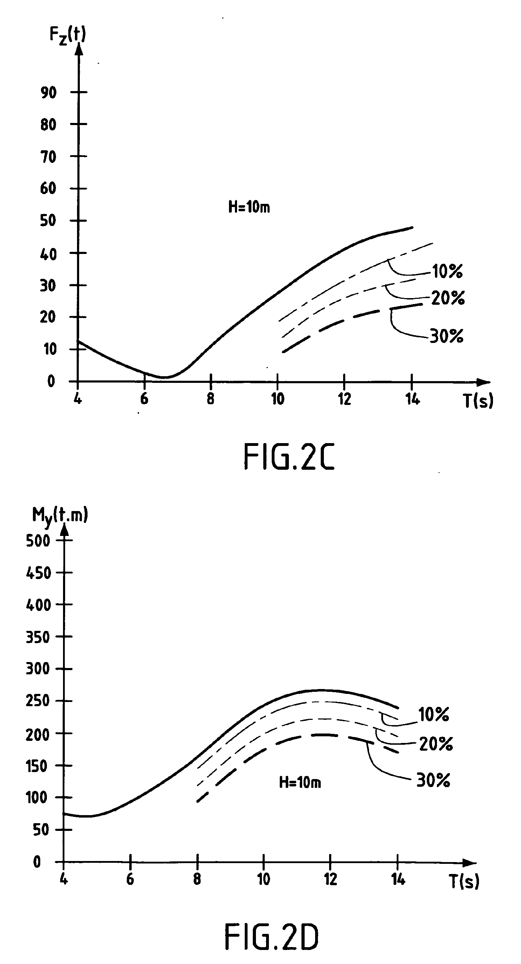

La comparaison des efforts horizontaux est effectuée sur la figure 2B et l'on peut constater que ceux-ci sont peu modifiés. Même pour une porosité de 30%, l'effort horizontal Fx passe ainsi de 105t/m à 90t/m. Par contre, les efforts verticaux sont beaucoup plus atténués, comme le montre la figure 2C. Ainsi, pour les périodes les plus extrêmes, par exemple T = 12s, l'effort vertical Fz est divisé par deux passant de 50t/m à 25t/m avec une porosité de 30%.

A la figure 2D, il apparaît que le moment de reversement par rapport à l'axe horizontal passant par O (point sur la surface supérieur de l'atténuateur au centre du radier) est amélioré du fait de la réduction de l'effort vertical et du maintien de l'effort horizontal.

D'une façon générale, la perforation du radier 10A apporte pour des porosités de 10 à 20%, voire au plus égales à 30%, notamment en cas de tempête extrême, une réduction significative de l'effort vertical comme une amélioration de l'efficacité de l'atténuateur aux périodes correspondantes. En contrepartie, cette efficacité est légèrement moindre pour des hauteurs de houle faible, c'est-à-dire pour des périodes inférieures à T = 5s. Avec une porosité aux environs de 10% on obtient un bon compromis sur une gamme de période de houle étendue, c'est à dire une amélioration sensible de l'effort vertical sans détérioration visible de l'atténuation.

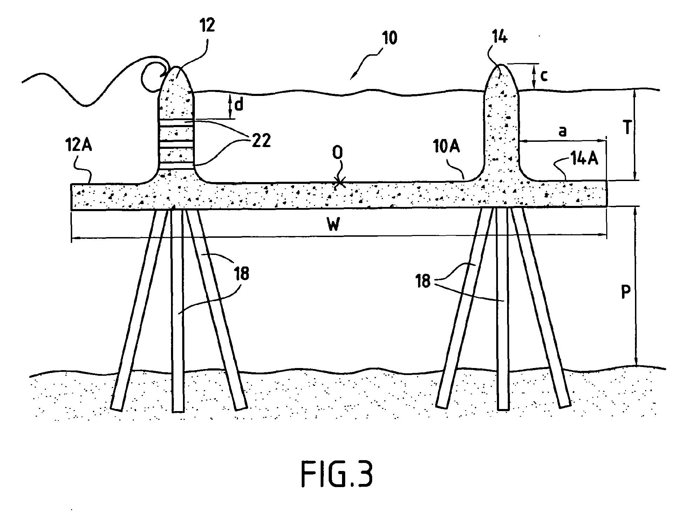

Un deuxième exemple de réalisation de l'invention est illustré à la figure 3. Dans cet exemple, qui trouve préférentiellement application, sans que cela ne soit limitatif, lorsque l'atténuateur est maintenu fixe sur des supports rigides de type jackets, piles ou pieux ancrés sur le sol naturel de la mer, et dans le but de limiter les forces de pression horizontales de pression agissant sur le dispositif, il est pratiqué des perforations 22 dans le bord amont 12 du dispositif sur au plus 50% de la surface de ce bord amont. En outre, comme précédemment le bord aval est dépourvu d'ouvertures, l'évacuation de l'eau en cas de franchissement du bord amont s'effectuant maintenant au travers des perforations 22 lors du reflux des vagues entre deux houles successives. On permet ainsi au bassin formé entre les bords amont et aval de se vider rapidement en évitant la formation d'un matelas d'eau résiduel.

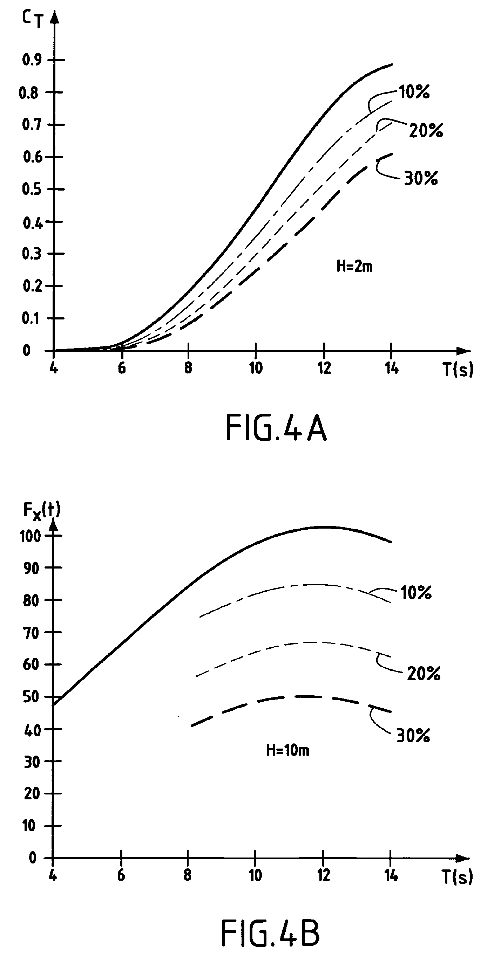

Les performances de l'atténuateur correspondant sont illustrées en regard des figures 4A à 4D sur lesquelles ont été représentés comme précédemment quatre graphes montrant respectivement l'évolution du coefficient de transmission CT, de l'effort horizontal Fx, de l'effort vertical Fz et du moment de renversement My, pour une gamme de période de houle allant de 4 s à 14 s et pour des porosités du bord amont de 10%, 20% et 30% respectivement. Les conditions d'essai sont les mêmes que précédemment, les perforations étant pratiquées depuis la cote d = -4m sous le niveau de la surface libre de l'eau.

La figure 4A permet de comparer le coefficient de transmission CT d'un atténuateur de houle en « dos de chameau » de l'art antérieur illustré par la courbe en traits pleins avec un atténuateur amélioré selon le deuxième exemple de réalisation de l'invention pour ces trois porosités différentes. On peut noter une grande amélioration de l'efficacité de l'atténuateur, en particulier pour les fortes périodes (10 à 14s). Ainsi, à une période T =10s, CT passe de 0,40 à 0,25 pour une porosité de 30%.

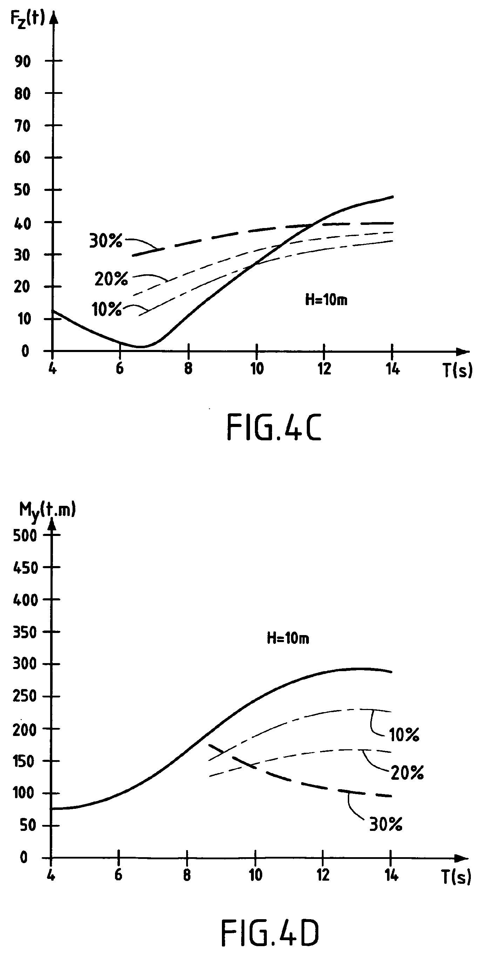

De même, l'effort horizontal illustré sur la figure 4B est largement diminué au fur et à mesure que la porosité augmente. On peut ainsi constater que pour une porosité de 30%, l'effort horizontal Fx maximal passe ainsi de 105t/m à 50t/m. Par contre, l'effort vertical s'accroît fortement, comme le montre la figure 4C, notamment pour les périodes inférieures à T = 12s avec une porosité de 30%.

A la figure 4D, il apparaît une nouvelle fois que le moment de reversement par rapport à l'axe horizontal passant par O (point sur la surface supérieur de l'atténuateur au centre du radier) est amélioré du fait de la diminution de l'effort horizontal nonobstant l'accroissement de l'effort vertical.

D'une façon générale, la perforation de bord amont 12 est bénéfique pour le fonctionnement global de l'atténuateur. Toutefois, l'accroissement des efforts verticaux doit être précisément contrôlé. On notera également qu'il a pu être constaté que le fait de perforer fortement le bord amont (notamment avec une porosité supérieure à 50%) rendait la structure de l'atténuateur quasiment asymétrique, celui-ci se comportant alors comme une plaque horizontale avec un seul bord aval, et donc son comportement aux efforts hydrodynamiques relativement défavorable.

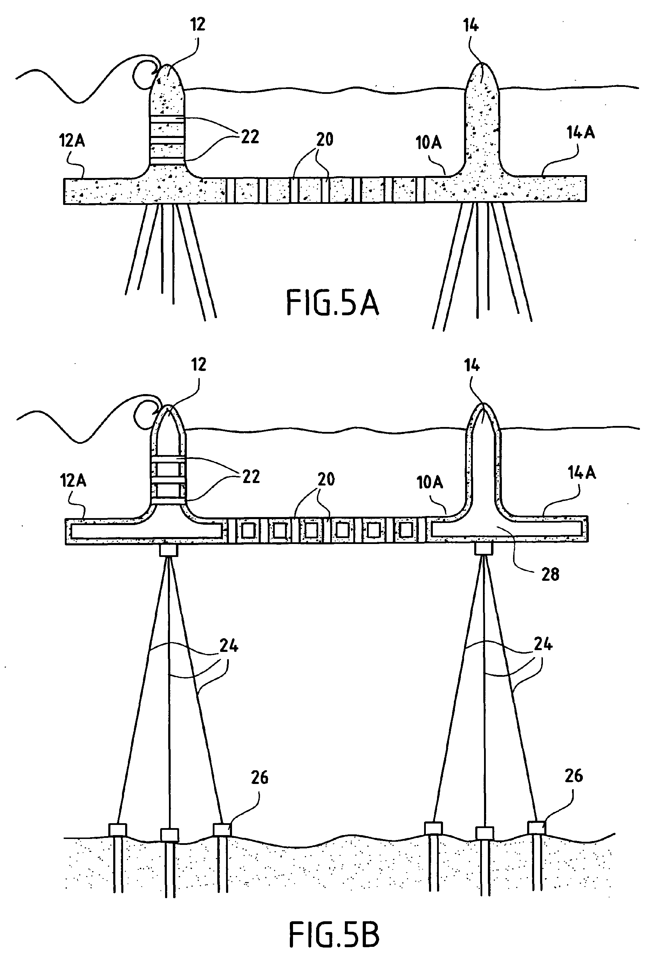

Un troisième exemple de réalisation de l'invention est illustré à la figure 5A. Dans cet exemple de réalisation, et dans le but de limiter à la fois les forces verticales et les forces horizontales de pression agissant sur le dispositif, il est pratiqué des perforations 20 dans la partie 10A de la plaque horizontale, appelée radier, disposée entre le bord amont et le bord aval du dispositif et des perforations 22 dans le bord amont 12 du dispositif. Ces perforations sont pratiquées sur au plus 30% de la surface du radier comme de celle du bord amont. En outre, comme précédemment le bord aval est dépourvu d'ouvertures, l'évacuation de l'eau en cas de franchissement du bord amont s'effectuant maintenant au travers des perforations 20 ou 22.

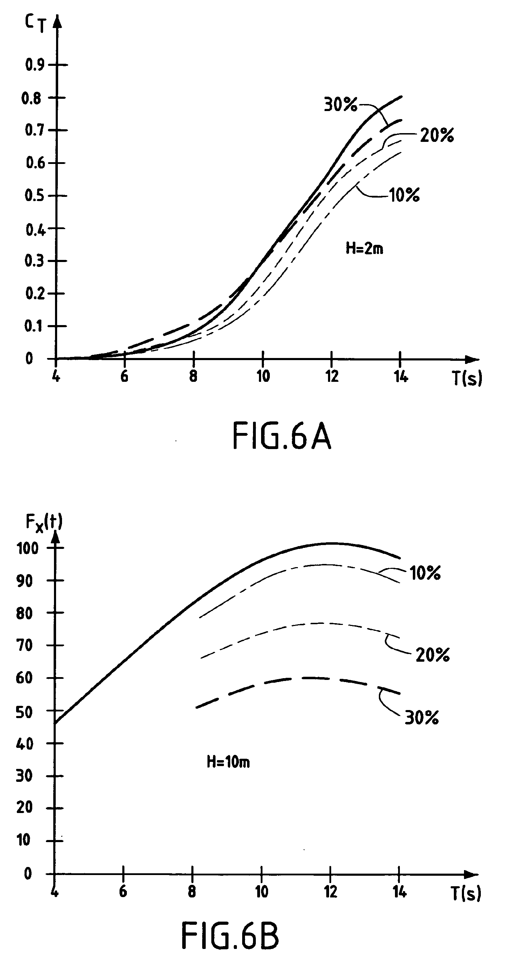

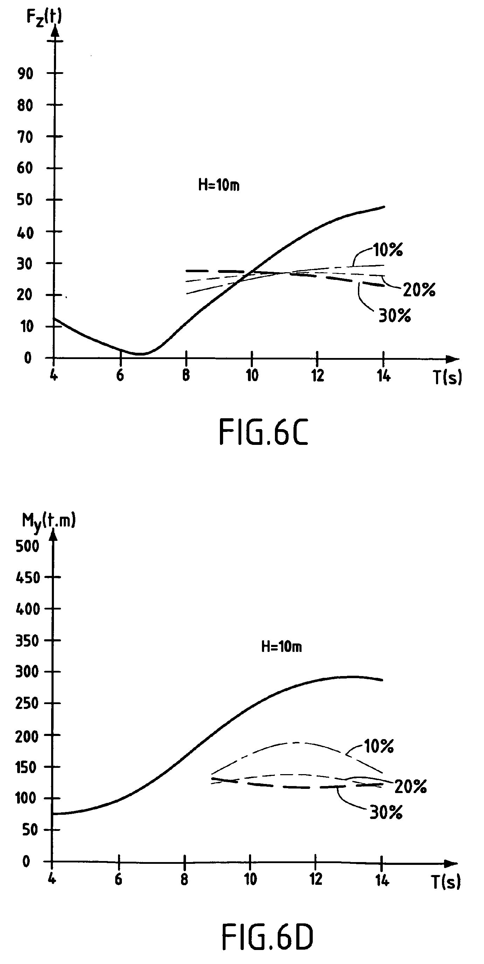

Les performances de l'atténuateur correspondant sont illustrées en regard des figures 6A à 6D sur lesquelles ont été représentés les quatre graphes montrant respectivement l'évolution du coefficient de transmission CT, de l'effort horizontal Fx, de l'effort vertical Fz et du moment de renversement My, pour une gamme de période de houle allant de 4 s à 14 s et pour des porosités identiques du radier et du bord amont de 10%, 20% et 30% respectivement. Les conditions d'essai sont les mêmes que précédemment, les perforations de bord amont étant aussi pratiquées depuis la cote -4m sous le niveau de la surface libre de l'eau.

La figure 6A permet une nouvelle fois de comparer le coefficient de transmission CT d'un atténuateur de houle en « dos de chameau » de l'art antérieur illustré par la courbe en traits pleins avec un atténuateur amélioré selon le troisième exemple de réalisation de l'invention pour les trois porosités précitées. On peut noter que l'efficacité de l'atténuateur se rapproche de celle obtenue avec perforation du radier seul.

Par contre, comme dans le cas de la perforation du bord amont, l'effort horizontal illustré sur la figure 6B est largement diminué au fur et à mesure que la porosité augmente. On peut ainsi constater que pour une porosité de 30%, l'effort horizontal Fx maximal passe ainsi de 105t/m à 60t/m. Mais surtout, l'effort vertical est également diminué, comme le montre la figure 6C, passant par exemple de 40t/m à 25 t/m pour une période T = 12s avec une porosité de 30%.

Le moment de reversement par rapport à l'axe horizontal passant par O (point sur la surface supérieur de l'atténuateur au centre du radier) est peu modifié par rapport à la configuration de la figure 3 (bord amont perforé seulement).

D'une façon générale, la perforation combinée du radier 10A et du bord amont 12 est encore plus bénéfique pour le fonctionnement global de l'atténuateur puisque aussi bien l'effort horizontal que l'effort vertical sont diminués alors que l'atténuation est très peu modifiée. Des essais complémentaires ont en outre montré que, pour obtenir une amélioration sensible tant de l'effort horizontal que de l'effort vertical sans détérioration visible de l'atténuation sur une gamme de période de houle étendue, il n'est pas obligatoire que la porosité soit identique au niveau du radier et du bord amont et qu'une porosité aux environs de 10%(±5%) sur le radier et aux environs de 30%(±10%) sur le bord amont assure le meilleur compromis quant au couple efficacité d'atténuation/efforts hydrodynamiques. Cette dernière configuration est surtout avantageuse lorsque l'atténuateur est doté d'une flottabilité positive et maintenu sous la surface de l'eau par un système de câbles tendus ou de bielles ancrés au fond de la mer, comme illustré sur la figure 5B qui montre une plaque horizontale munie de bords amont et aval 12, 14 et retenue par des câbles 24 ancrés au fond de la mer par moyens d'ancrage 26. Cette plaque horizontale comporte différents espaces vides, par exemple celui référencé 28, agencés de telle sorte que son poids total soit inférieur ou égal à la poussée d'Archimède afin de lui procurer une flottabilité positive.

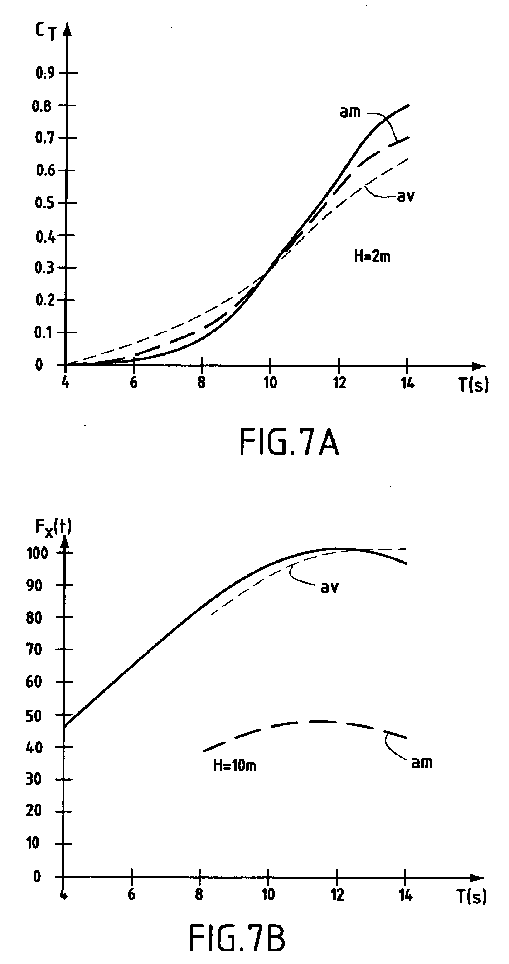

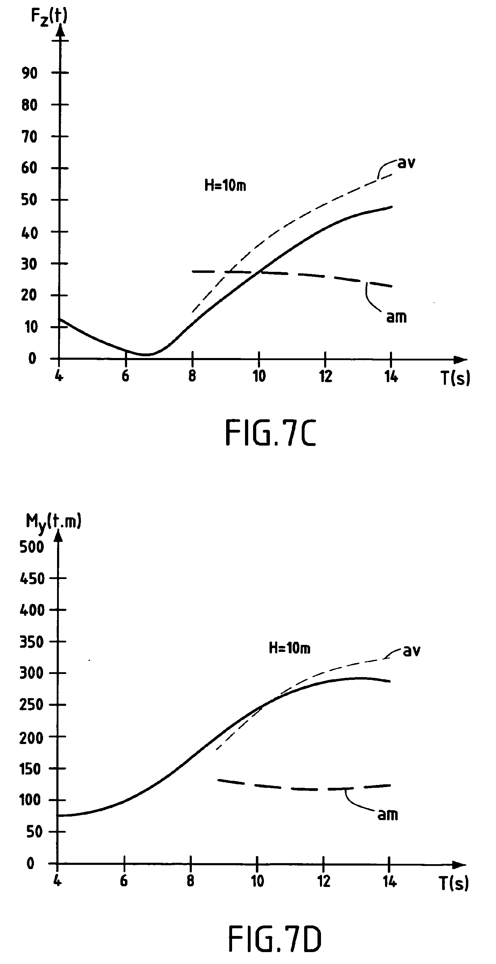

Les graphes des figures 7Aà 7D illustrent d'ailleurs une telle configuration optimum (référencée « am » sur les figures) qui est comparée à la fois à un atténuateur de l'art antérieur (courbes en traits pleins) et à une configuration inversée (référencée « av » sur les figures) dans laquelle c'est le bord aval qui est percé avec une porosité de 30%, le radier gardant sa porosité de 10%. Cette comparaison permet de constater que la fonction des perforations de bord amont est tout à fait différente de celle des perforations du bord aval.

En effet, si l'effet sur l'atténuation du dispositif (figure 7A) est peu différent selon que les perforations sont effectuées sur le bord amont ou le bord aval, notamment pour les périodes de houle faible ou intermédiaire, on peut noter sur les figures 7B et 7C que la perforation du bord amont (associée à celle du radier) contribue fortement à la diminution des efforts horizontaux et verticaux alors que celle du bord aval est pratiquement sans effet sur ces efforts voire les augmente très légèrement notamment pour des périodes de houle forte. Il en est de même du moment de renversement qui est amélioré avec une perforation du bord amont alors qu'il est très légèrement dégradé avec une perforation du bord aval.

On notera, que les perforations de l'invention se distinguent aussi de celles pratiquées dans les dispositifs de l'art antérieur, notamment ceux de type à caisson, qui ont pour but essentiel, lorsqu'elles sont pratiquées dans la paroi aval de ces dispositifs, de générer un retard entre la vague incidente absorbée par le caisson et la vague restituée hors du caisson et, lorsqu'elles sont pratiquées sur une cloison horizontale de ces caissons, de créer un amortissement du mouvement d'oscillation de l'eau dans le caisson pour assurer une déperdition de l'énergie. Dans ces deux cas, il s'agit de créer une perte de charge dans les perforations pour créer un amortissement ou un frein à la propagation des oscillations.

Au contraire, avec l'invention, la perforation sur une partie de leur surface de l'un au moins des deux éléments formés par le bord perpendiculaire amont et la partie de plaque comprise entre les bords amont et aval (radier) ont pour objet de créer une limitation notable des forces de pression verticales et horizontales agissant sur l'atténuateur pour permettre de minimiser le dimensionnement tant des structures de cet atténuateur que de ses supports ou de ses liaisons.

## Revendications

1. Dispositif d'atténuation de la houle comportant une plaque horizontale (10) faiblement immergée dans la houle incidente, ladite plaque étant maintenue en position sous la surface libre de l'eau par des moyens (18, 24) ancrés sur le fond de la mer et présentant des bords perpendiculaires amont (12) et aval (14) relevés jusqu'à une cote positive au dessus de ladite surface libre de l'eau, de sorte que la houle incidente ne puisse se propager librement par-dessus ladite plaque, lesdits bords amont et aval étant chacun prolongés à leur base par un onglet (12A, 14A) d'une même longueur déterminée, l'ensemble formant ainsi une structure à profil symétrique dit en « dos de chameau » emprisonnant sous ladite plaque horizontale une masse d'eau, dite « mur d'eau », apte à réfléchir la houle incidente, **caractérisé en ce que** l'un au moins des deux éléments formés par ledit bord perpendiculaire amont et la partie de plaque, dite radier (10A), comprise entre lesdits bords amont et aval, comporte des perforations (20, 22) sur une partie de sa surface apte à diminuer les efforts hydrodynamiques agissant sur ladite structure.

2. Dispositif d'atténuation de la houle selon la revendication 1, **caractérisé en ce que** ledit radier comporte des perforations (20) sur au plus 30% de sa surface.

3. Dispositif d'atténuation de la houle selon la revendication 2, **caractérisé en ce que** ledit radier comporte des perforations (20) sur environ 10 % de sa surface.

4. Dispositif d'atténuation de la houle selon la revendication 1, **caractérisé en ce que** ledit bord perpendiculaire amont comporte sous ladite surface libre de l'eau des perforations (22) sur au plus 50% de sa surface.

5. Dispositif d'atténuation de la houle selon la revendication 4, **caractérisé en ce que** ledit bord perpendiculaire amont comporte sous ladite surface libre de l'eau des perforations (22) sur environ 30% de sa surface.

6. Dispositif d'atténuation de la houle selon la revendication 2 et la revendication 4, **caractérisé en ce que** ledit radier comporte des perforations sur environ 10 % de sa surface et ledit bord perpendiculaire amont comporte sous ladite surface libre de l'eau des perforations sur environ 30% de sa surface.

7. Dispositif d'atténuation de la houle selon l'une quelconque des revendications 1 à 6, **caractérisé en ce que** ladite plaque est maintenue en position sous ladite surface libre de l'eau au moyen de supports rigides (18) de type jackets, piles ou pieux ancrés sur le fond de la mer.

8. Dispositif d'atténuation de la houle selon l'une quelconque des revendications 1 à 6, **caractérisé en ce que** ladite plaque est pourvue d'une flottabilité positive et maintenue en position sous ladite surface libre de l'eau au moyen de câbles tendus (24) ou de bielles ancrés sur le fond de la mer.

## Patentansprüche

1. Vorrichtung zur Dämpfung des Seegangs, umfassend eine in den anströmenden Seegang leicht eingetauchte horizontale Platte (10), wobei die Platte durch Mittel (18, 24), die am Meeresgrund verankert sind, unter der freien Wasseroberfläche in Position gehalten wird und senkrechte stromaufwärtige (12) und stromabwärtige (14) Ränder aufweist, die bis zu einem positiven Maß oberhalb der freien Wasseroberfläche hochgezogen sind, so dass der anströmende Seegang sich nicht über die Platte hinweg frei ausbreiten kann, wobei die stromaufwärtigen und stromabwärtigen Ränder jeweils an ihrer Basis durch eine Zunge (12A, 14A) um eine gleiche bestimmte Länge verlängert sind, wobei die Anordnung somit eine Struktur mit symmetrischem, sogenannten "Kamelrücken"-Profil bildet, die unter der horizontalen Platte eine Wassermasse, sogenannte "Wassermauer" einschließt, welche geeignet ist, den anströmenden Seegang zurückzuwerfen, **dadurch gekennzeichnet, dass** wenigstens eines der beiden Elemente, die durch den senkrechten stromaufwärtigen Rand und den zwischen den stromaufwärtigen und stromabwärtigen Rändern gelegenen Plattenteil, die sogenannte Sohle (10A), gebildet sind, über einen Teil seiner Fläche Löcher (20, 22) aufweist, die geeignet sind, die auf die Struktur wirkenden hydrodynamischen Kräfte zu verringern.

2. Vorrichtung zur Dämpfung des Seegangs nach Anspruch 1, **dadurch gekennzeichnet, dass** die Sohle über höchstens 30 % ihrer Fläche Löcher (20) aufweist.

3. Vorrichtung zur Dämpfung des Seegangs nach Anspruch 2, **dadurch gekennzeichnet, dass** die Sohle über etwa 10 % ihrer Fläche Löcher (20) aufweist.

4. Vorrichtung zur Dämpfung des Seegangs nach Anspruch 1, **dadurch gekennzeichnet, dass** der senkrechte stromaufwärtige Rand unter der freien Wasseroberfläche über höchstens 50 % seiner Fläche Löcher (22) aufweist.

5. Vorrichtung zur Dämpfung des Seegangs nach Anspruch 4, **dadurch gekennzeichnet, dass** der senkrechte stromaufwärtige Rand unter der freien Wasseroberfläche über etwa 30 % seiner Fläche Löcher (22) aufweist.

6. Vorrichtung zur Dämpfung des Seegangs nach Anspruch 2 und Anspruch 4, **dadurch gekennzeichnet, dass** die Sohle über etwa 10 % ihrer Fläche Löcher aufweist und der senkrechte stromaufwärtige Rand unter der freien Wasseroberfläche über etwa 30 % seiner Fläche Löcher aufweist.

7. Vorrichtung zur Dämpfung des Seegangs nach einem der Ansprüche 1 bis 6, **dadurch gekennzeichnet, dass** die Platte unter der freien Wasseroberfläche mittels starrer Träger (18) vom Typ Jackets, Pfeilern oder Pfählen, die am Meeresgrund verankert sind, in Position gehalten wird.

8. Vorrichtung zur Dämpfung des Seegangs nach einem der Ansprüche 1 bis 6, **dadurch gekennzeichnet, dass** die Platte mit einem positiven Auftrieb versehen ist und unter der freien Wasseroberfläche mittels gespannter Seile (24) oder Stangen, die am Meeresgrund verankert sind, in Position gehalten wird.

## Claims

1. Swell attenuating device comprising a horizontal plate (10) slightly immersed in the incident sea swell, said plate being held in position under the free surface of the water by means (18, 24) anchored on the sea-bed and presenting perpendicular upstream (12) and downstream (14) edges raised to a positive dimension above said free surface of the water, so that the incident sea swell cannot propagate freely over said plate, each of said upstream and downstream edges being extended at their base by a tab-shaped element (12A, 14A) of the same specific length, the assembly thus forming a symmetrically profiled structure in the form of a so-called "camel's back" imprisoning under said horizontal plate a mass of water known as "waster wall" capable of reflecting the incident sea swell, **characterized in that** one at least of the two elements formed by said perpendicular upstream edge and the plate part, so-called raft (10A), laid between said upstream and downstream edges comprises orifices (20, 22) over part of its surface capable of decreasing hydrodynamics efforts acting on the structure.

2. Swell attenuating device according to claim 1, **characterized in that** said raft comprises orifices (20) over at most 30% of its surface.

3. Swell attenuating device according to claim 2, **characterized in that** said raft comprises orifices (20) over about 10% of its surface.

4. Swell attenuating device according to claim 1, **characterized in that** said perpendicular upstream edge under said free surface of the water comprises orifices (22) over at most 50% of its surface.

5. Swell attenuating device according to claim 4, **characterized in that** said perpendicular upstream edge under said free surface of the water comprises orifices (22) over about 30% of its surface.

6. Swell attenuating device according to claim 2 and claim 4, **characterized in that** said raft comprises orifices over about 10 % of its surface and said perpendicular upstream edge under said free surface of the water comprises orifices over about 30% of its surface.

7. Swell attenuating device according to any one of claims 1 to 6, **characterized in that** said plate is held in position under said free surface of the water by means of rigid supports (18) of the jacket or pile type anchored on the sea-bed.

8. Swell attenuating device according to any one of claims 1 to 6, **characterized in that** said plate is given positive buoyancy and held in position under said free surface of the water by means of stretched cables (24) or rods anchored on the sea-bed.
